# EUROPÄISCHE PATENTANMELDUNG

(11) **EP 1 122 904 A2**
(43) Veröffentlichungstag der Anmeldung: **08.08.2001**
(21) Anmeldenummer: 01100608.7
(22) Anmeldetag: 10.01.2001
(51) Int. Cl.: H04J 14/02, H04Q 11/00

(54) **Access-Knoten für optische Netze mit variablen Access-Wellenlängen**

(30) Priorität: 01.02.2000 DE 10004290
(71) Anmelder: SIEMENS AKTIENGESELLSCHAFT, 80333 München (DE)
(72) Erfinder: Bischoff, Mathias, Dr., 81375 München (DE)

(57) **Zusammenfassung**

Access-Knoten für optische Netze mit variablen Access-Wellenlängen, Nutzergerät zum Anschluß an einen solchen Access-Knoten, Verfahren zum Einspeisen von mehreren Signalen von mehreren Nutzern in ein optisches Netz und Verwendung eines Access-Knotens und mindestens eines Nutzergeräts zur Durchführung eines solchen Verfahrens.

Die Erfindung befaßt sich mit einem Access-Knoten 10 für optische Netze mit variablen Access-Wellenlängen, der über jeweils einen ersten Lichtleiter 3.1-3.k mit Nutzergeräten 2.1-2.k verbindbar und über zweite Lichtleiter 4.1-4.n an das optische Netz anschließbar ist. Gegenüber dem Stand der Technik weist der Access-Knoten 10 Lichtquellen 11.1-11.m auf, die auf Wellenlängen des optischen Netzes emittieren, deren Licht in den Nutzgeräten 2.1-2.k modulierbar ist. Dadurch wird vermieden, daß in den einzelnen Nutzergeräten 2.1-2.k jeweils eine Lichtquelle angeordnet sein muß, die in einem dynamischen optischen Netz Licht unterschiedlicher Wellenlänge emittieren können muß oder deren Wellenlänge nachträglich umgewandelt werden muß. Außerdem wird dadurch vermieden, daß in den Nutzergeräten 2.1-2.k Leitungskarten vorgesehen werden müssen, die zu einem hohen logistischen Aufwand führen. Erfindungsgemäß ist es demnach möglich, die einzelnen Nutzergeräte 2.1-2.k ohne Lichtquellen auszuführen. Dadurch wird deren Aufbau bedeutend vereinfacht. Durch ein erfindungsgemäßes Verfahren werden die oben genannten Vorteile des Access-Knotens 10 und der einzelnen Benutzergeräte 2.1-2.k ausgenützt.

## Beschreibung

Access-Knoten für optische Netze mit variablen Access-Wellenlängen, Nutzergerät zum Anschluß an einen solchen Access-Knoten, Verfahren zum Einspeisen von mehreren Signalen von mehreren Nutzern in ein optisches Netz und Verwendung eines Access-Knotens und mindestens eines Nutzergeräts zur Durchführung eines solchen Verfahrens.

Die Erfindung befaßt sich mit einem Access-Knoten für optische Netze mit variablen Access-Wellenlängen, einem Nutzergerät zum Anschluß an einen solchen Access-Knoten, einem Verfahren zum Einspeisen von mehreren Signalen von mehreren Nutzern in ein optischen Netz und die Verwendung eines Access-Knotens und mindestens eines Nutzergeräts zur Durchführung eines solchen Verfahrens.

In wellenlängenmultiplexbasierten optischen Netzen müssen die auf einer Faser gemeinsam geführten Signale auf Licht unterschiedlicher Wellenlängen, den Trägerfrequenzen, moduliert werden. Erfolgt der Zugang zu solchen optischen Netzen mit optischen Signalen, so wird diese Voraussetzung dadurch erzielt, daß sich die entsprechenden Lichtquellen in den einzelnen Geräten der Nutzer des optischen Netzes befinden. Der Nutzer muß bei den bisher üblichen Verfahren daher schon vor dem Einrichten der Verbindung wissen, welche Wellenlänge ihm im optischen Netz zugewiesen wird. Er muß dann sein Signal mit dieser entsprechenden Wellenlänge senden. Dies führt insbesondere in optischen Netzen mit hoher Dynamik, wo die Verbindungen nur semipermanent geschaltet werden, zu Problemen. Hierbei kann nämlich nicht gewährleistet werden, daß der gleiche Nutzer bei jedem Verbindungsaufbau immer die gleiche Wellenlänge zugewiesen bekommt. Dies hat zur Folge, daß der Nutzer in dynamischen optischen Netzen in der Lage sein muß, auf jeder im optischen Netz verwendeten Wellenlänge senden zu können. Hierfür sind abstimmbare Lichtquellen erforderlich, deren Wellenlänge verändert werden kann. Die Entwicklung auf dem Gebiet solcher abstimmbarer Lichtquellen ist jedoch noch nicht soweit fortgeschritten, daß für den praktischen Einsatz befriedigende Ergebnisse erzielt werden können. Es sind daher Lösungen erforderlich, die mit Lichtquellen auskommen, die auf einer festen Wellenlänge senden.

Die am weitesten verbreitete Lösung verwendet Transponder. Dies sind Geräte, die eine beliebige Eingangswellenlänge auf eine feste Ausganswellenlänge umsetzen, wobei üblicherweise zuerst eine Umwandlung des Signals in das Basisband vorgenommen wird und dieses Signal dann der Ausgangswellenlänge erneut aufmoduliert wird. Dies führt dazu, daß der Nutzer des optischen Netzes auf einer beliebigen Wellenlänge senden kann. Diese bekannte Lösung hat jedoch den großen Nachteil, daß für jeden Nutzer im Access-Knoten ein eigener Transponder erforderlich ist. Dadurch wird der Netzzugang nur durch Aufbringen von erheblichen Kosten ermöglicht. Darüber hinaus besteht bei dieser Lösung die Gefahr, daß der Transponder die Signalqualität verschlechtert. Insbesondere ist dies bei Ausführungen der Fall, die im Basisband nur verstärken oder mit Begrenzern arbeiten. Desweiteren besteht bei diesen bekannten Lösungen die Gefahr, daß nicht alle Signalformate verarbeitet werden können. Dies ist insbesondere bei Ausführungen der Fall, die eine vollständige Regeneration im Basisband vornehmen.

Als eine kostengünstigere Alternative ist es bekannt, die einzelnen Geräte der Nutzer mit Sendern auszustatten, die auf der ihnen jeweils zugewiesenen Wellenlänge senden. Jedoch weist auch diese kostengünstigere Lösung eklatante Nachteile auf. Zum einen müssen die Leitungskarten jedes am Netz betriebenen Gerätes in sämtlichen verwendeten Wellenlängenausführungen hergestellt und gelagert werden. Dies führt zu einem großen logistischen Aufwand. Zum anderen ergibt sich dabei der Nachteil, daß bei jeder Neuzuweisung einer Wellenlänge im Zusammenhang mit einem Verbindungsaufbau oder Verbindungswiederaufbau die Leitungskarten ausgetauscht werden müssen. Dies führt insbesondere in optischen Netzen mit hoher Dynamik zur Notwendigkeit eines häufigen Kartenaustauschs. Dieser immense Aufwand ist nicht mehr tolerierbar.

Aufgabe der Erfindung ist es demnach, Access-Knoten, Nutzergeräte sowie ein Verfahren zum Einspeisen mehrerer Signale von mehrerer Nutzern in ein optisches Netz zur Verfügung zu stellen, die die vorstehenden Probleme nicht aufweisen.

Bei einem erfindungsgemäßen Access-Knoten ist vorgesehen, daß die benötigten Lichtquellen mit den unterschiedlichen Wellenlängen in diesem selbst angeordnet sind und nicht mehr in den einzelnen Nutzergeräten. Dadurch ist es nicht nötig, für jeden Nutzer im Access-Knoten einen Transponder vorzusehen. Ebenfalls ist es nicht nötig, Leitungskarten in den Nutzergeräten auszutauschen, da die jeweilige Wellenlänge im Access-Knoten erzeugt wird und von dort zu den einzelnen Nutzergeräten übertragen wird. Desweiteren hat der Betreiber des optischen Netzes durch einen erfindungsgemäßen Access-Knoten die volle Kontrolle über alle Lichtquellen in seinem Netz. Er ist damit in der Lage, auf einfache Weise die Frequenzkonstanz und den Leistungspegel der Lichtsignale in seinem Netz sicher zu stellen. Die räumliche Nähe der Lichtquellen ermöglicht darüber hinaus die Teilung von teuren Überwachungseinrichtungen, wie etwa optische Spektrumanalysatoren, unter aller Quellen.

Bei einem erfindungsgemäßen Verfahren zum Einspeisen von mehreren Signalen von mehreren Nutzergeräten in ein optisches Netz ist es deshalb nicht mehr nötig, daß die einzelnen erfindungsgemäßen Nutzergeräte eine Lichtquelle aufweisen, die die für das optische Netz benötigte Trägerfrequenz produziert. In den einzelnen Nutzergeräten wird lediglich auf die vom Access-Knoten kommende Trägerfrequenz die Information des Nutzers durch eine Modulation auf dieses Trägersignal aufgespielt. Danach wird das modulierte Trägersignal wieder an den Access-Knoten zurückübertragen und dieser speist es dann in das optische Netz ein.

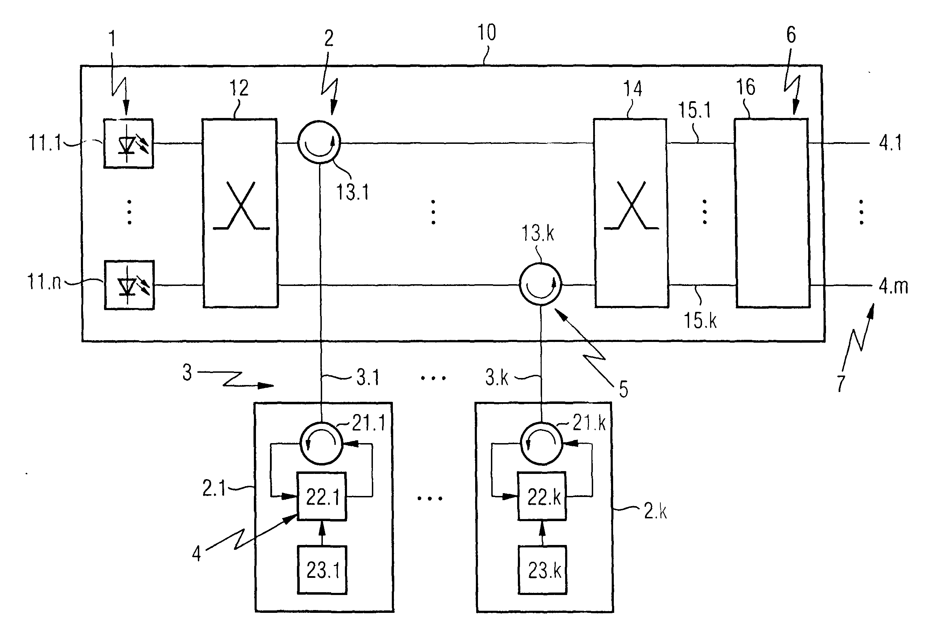

Weitere Vorteile und Einzelheiten der Erfindung sind Gegenstand der Unteransprüche und werden anhand des in der Figur dargestellten und im folgenden beschriebenen Ausführungsbeispiels erläutert.

Die einzige Figur zeigt eine schematische Darstellung eines Access-Knotens mit Nutzergeräten, der an ein optisches Netz angeschlossen ist.

Der optische Access-Knoten 10 weist n Lichtquellen 11.1-11.n auf, wobei n größer oder gleich der Anzahl der unterschiedlichen Wellenlängen ist, die im optischen Netz verwendet werden. Die Wellenlängen dieser Lichtquellen 11.1-11.n sind identisch mit den im optischen Netz verwendeten Wellenlängen. Dadurch, daß die Lichtquellen räumlich dicht beieinander liegen, nämlich im Access-Knoten 10 und nicht bei jedem Nutzer, können vorzugsweise Laser Arrays verwendet werden, die gegenüber Einzellasern kostengünstiger sind und in ihren Emissionswellenlängen bereits auf das Kanalraster des Wellenlängenmultiplex abgestimmt gefertigt werden können. Die prinzipiell denkbare Verwendung von Laser Arrays im Zusammenhang mit Transpondern scheitert an dem zu hohen Platzbedarf der Basisbandelektronik, die jeweils eine ganze Karte ausfüllt. Damit ist es erforderlich, jede Transponderkarte mit einem separaten Laser zu bestücken. Da die vorliegende Erfindung auf Basisbandelektronik verzichtet, ist eine solche Beschränkung nicht vorhanden.

An die Lichtquellen 11.1-11.n schließt sich ein Koppelfeld 12 an. An das Koppelfeld 12 schließen sich k erste Zirkulatoren 13.1-13.k an, die in parallelen Leitungen angeordnet sind. Die ersten Zirkulatoren 13.1-13.k sind über k erste Lichtleiter 3.1-3.k, die aus dem Access-Knoten 10 herausgeführt sind, mit den Nutzergeräten 2.1-2.k verbunden. Innerhalb des Access-Knotens 10 schließt sich an die ersten Zirkulatoren 13.1-13.k ein zweites Koppelfeld 14 an. Das zweite Koppelfeld 14 ist über k Verbindungen 15.1-15.k mit einem Signalverarbeitungsblock 16 verbunden. Vom Signalverarbeitungsblock 16 ausgehend sind m zweite Lichtleiter 4.1-4.m aus dem Access-Knoten 10 herausgeführt, die mit dem optischen Netz (nicht gezeigt) verbunden sind.

Die über die ersten Lichtleiter 3.1-3.k mit dem Access-Knoten 10 verbundenen Nutzergeräte 2.1-2.k weisen jeweils einen zweiten Zirkulator 21.1-21.k und einen Modulator 22.1-22.k auf. Die Modulatoren 22.1-22.k sind jeweils mit einer Informationsquelle 23.1-23.k verbunden.

Ein erfindungsgemäßes Verfahren zum Einspeisen von mehreren Signalen von mehreren Nutzern in ein optisches Netz läuft mit der oben beschriebenen Vorrichtung folgendermaßen ab:

Durch die Lichtquellen 11.1-11.n des optischen Access-Knotens 10 kommt es zu einem Erzeugen 1 von Lichtsignalen unterschiedlicher Wellenlängen. Bei diesen Wellenlängen handelt es sich um die, wie oben beschrieben, im optischen Netz verwendeten Wellenlängen. Im einfachsten Fall entspricht die Anzahl n der Lichtquellen 11.1-11.n genau der Anzahl der Wellenlängen des Wellenlängenmultiplex, d.h. der Anzahl der optischen Kanäle pro Lichtleiter. Die n unmodulierten Lichtsignale von den Lichtquellen 11.1-11.n werden dem ersten Koppelfeld 12 zugeführt. Das erste Koppelfeld 12 leitet diese Lichtsignale an die k ersten Zirkulatoren 13.1-13.k entsprechend der Zuordnung der einzelnen Wellenlängen weiter. Dort findet ein Auskoppeln 2 der Lichtsignale aus dem Access-Knoten 10 über die ersten Lichtleiter 3.1-3.k statt. Dadurch kommt es zu einem Übermitteln 3 der Lichtsignale zu den Nutzergeräten 2.1-2.k.

In den einzelnen Nutzergeräten 2.1-2.k werden die unmodulierten Lichtsignale über die zweiten Zirkulatoren 21.1-21.k an den jeweiligen Modulator 22.1-22.k weitergeleitet. In den Modulatoren 22.1-22.k kommt es zu einem Modulieren 4 dieser Lichtsignale gemäß den Informationen, die von den Informationsquellen 23.1-23.k an die Modulatoren 22.1-22.k weitergegeben werden. Die nunmehr modulierten Lichtsignale werden wiederum über die selben ersten Lichtleiter 3.1-3.k zurück in den Access-Knoten 10 übertragen, was einem Einkoppeln 5 in den Access-Knoten 10 entspricht. Anstelle der zweiten Zirkulatoren 21.1-21.k und der Modulatoren 22.1-22.k können auch in Reflexion arbeitende Modulatoren eingesetzt werden.

Aus den ersten Lichtleitern 3.1-3.k laufen demnach unmodulierte Lichtsignale in Richtung vom Access-Knoten 10 zu den einzelnen Nutzergeräten 2.1-2.k mit den den einzelnen Nutzergeräten 2.1-2.k zugewiesen Wellenlängen und in Richtung von den Nutzergeräten 2.1-2.k zum Access-Knoten 10 modulierte Lichtwellen der gleichen Wellenlänge.

Im Access-Knoten 10 werden die modulierten Lichtwellen, die über die ersten Lichtleiter 3.1-3.k von den Nutzergeräten 2.1-2.k ankommen, über die ersten Zirkulatoren 13.1-13.k an das zweite Koppelfeld 14 weitergeleitet. Anstatt erster Zirkulatoren 13.1-13.k können genausogut Richtkoppler eingesetzt werden. Vorzugsweise werden solche Richtkoppler verwendet, die als Faserrichtkoppler ausgebildet sind. Im zweiten Koppelfeld 14 werden die Lichtsignale entsprechend ihrer Wellenlängen geordnet und anschließend über die Verbindungen 15.1-15.k zur weiteren Verarbeitung an den Signalverarbeitungsblock 16 weitergeleitet. Dieser Signalverarbeitungsblock 16 enthält zumindest Wellenlängenmultiplexer. Er kann aber genauso gut auch weitere Koppelfelder, optische Schalter, optische Verstärker, optische Überwachungseinrichtungen und/oder sonstige Signalverarbeitungseinheiten enthalten. Wenn der Signalverarbeitungsblock 16 ein weiteres Koppelfeld enthält, wird dieses vorteilhafterweise mit dem zweiten Koppelfeld 14 zusammengefaßt. In diesem Falle entfallen die Verbindungen 15.1-15.k. In den Wellenmultiplexern kommt es zu einem Erzeugen 6 von Wellenlängenmultiplexsignalen.

Der Signalverarbeitungsblock 16 überträgt die in ihm hergestellten Wellenlängenmultiplexsignale auf die zweiten Lichtleiter 4.1-4.m, was somit zu einem Einspeisen 7 in das optische Netz führt. Wenn nur ein einziger zweiter Lichtleiter 4.1 den Signalverarbeitungsblock 16 mit dem optischen Netz verbindet, liegt ein Terminalmultiplexer vor, bei zwei zweiten Lichtleitern 4.1, 4.2 ein Add/Drop-Multiplexer und für mehr als zwei zweite Lichtleiter 4.1-4.m ein optischer Cross-Connect. Bei mehr als einem zweiten Lichtleiter 4.1-4.m besteht die Möglichkeit, anstelle von jeweils einer Anzahl m von Lichtquellen 11.1-11.n einer Wellenlänge eine geringere Anzahl von Lichtquellen 11.1-11.n vorzusehen, und diese Lichtquellen 11.1-11.n unter mehreren Nutzergeräten 2.1-2.k zu teilen. Hierfür muß das ersten Koppelfeld 12 multicast-fähig ausgeführt werden. Genausogut ist es jedoch auch möglich, für eine Wellenlänge mehr als m Lichtquellen 11.1-11.n vorzusehen, um damit beim Ausfall einer Lichtquelle 11.1-11.n auf eine redundante Lichtquelle 11.1-11.n gleicher Wellenlänge zurückgreifen zu können.

Durch die Verwendung der oben beschriebenen Vorrichtung und des oben beschriebene Verfahrens ist es auch problemlos möglich, die Überwachung der zweiten Lichtleiter 3.1-3.k, über die die Nutzergeräte 2.1-2.k angeschlossen sind, vorzunehmen. Selbst wenn bei einem Nutzergerät 2.1-2.k ein Stromausfall vorliegt, arbeitet der passive zweite Zirkulator 21.1-21.k und läßt der Modulator 22.1-22.k das Licht unmoduliert passieren. Dabei kann es möglicherweise zu einer etwas stärkeren Dämpfung als im Betriebsfall kommen. Der Betreiber ist jedoch durch die von den Nutzergeräten 2.1-2.k zurückübertragenen Lichtsignale in der Lage, eine eventuelle Unterbrechung einer der ersten Lichtleiter 3.1-3.k von einem Ausfall einer der Nutzergeräte 2.1-2.k zu unterscheiden.

## Patentansprüche

1. Access-Knoten (10) für optische Netze mit variablen Access-Wellenlängen, der über jeweils einen ersten Lichtleiter (3.1-3.k) mit Nutzergeräten (2.1-2.k) verbindbar und über zweite Lichtleiter (4.1-4.m) an das optische Netz anschließbar ist,
**dadurch gekennzeichnet, daß**
er Lichtquellen (11.1-11.n) aufweist, die auf Wellenlängen des optischen Netzes emittieren, deren Licht in den Nutzgeräten (2.1-2.k) modulierbar ist.

2. Access-Knoten (10) nach Anspruch 1,
**dadurch gekennzeichnet, daß**
die Lichtquellen (11.1-11.n) Laser, insbesondere Laser Arrays, sind.

3. Access-Knoten (10) nach Anspruch 1 oder 2,
**dadurch gekennzeichnet, daß**
er optische Koppelelemente aufweist, insbesondere erste Zirkulatoren (13.1-13.k) und/oder Richtkoppler, die zwischen den Lichtquellen (11.1-11.n) und den ersten Lichtleitern (3.1-3.k) angeordnet sind.

4. Access-Knoten (10) nach einem der vorstehenden Ansprüche,
**dadurch gekennzeichnet, daß**
zwischen den Lichtquellen (11.1-11.n) und den ersten Lichtleitern (3.1-3.k) ein erstes Koppelfeld (12) angeordnet ist, das bevorzugt multicast-fähig ist.

5. Access-Knoten (10) nach einem der vorstehenden Ansprüche,
**dadurch gekennzeichnet, daß** zwischen den ersten Lichtleitern (3.1-3.k) und den zweiten Lichtleitern (4.1-4.m) ein Signalverarbeitungsblock (16) mit optischen Wellenlängenmultiplexern angeordnet ist.

6. Access-Knoten (10) nach Anspruch 5,
**dadurch gekennzeichnet, daß**
zwischen den ersten Lichtleitern (3.1-3.k) und dem Signalverarbeitungsblock (16) ein zweites Koppelfeld (14) angeordnet ist.

7. Access-Knoten (10) nach Anspruch 5 oder 6,
**dadurch gekennzeichnet, daß**
der Signalverarbeitungsblock (16) mindestens eine zusätzliche Signalverarbeitungseinheit aufweist, insbesondere ein weiteres Koppelfeld, einen optischen Schalter, einen optischen Verstärker und/oder eine optische Überwachungseinrichtung.

8. Access-Knoten (10) nach Anspruch 6 und 7,
**dadurch gekennzeichnet, daß**
das weitere Koppelfeld mit dem zweiten Koppelfeld (14) zusammengefaßt ist.

9. Nutzergerät (2.1-2.k) zum Anschluß an einen Access-Knoten (10) nach einem der vorstehenden Ansprüche,
**dadurch gekennzeichnet, daß**
es einen zweiten Zirkulator (21.1-21.k) und einen Modulator (22.1-22.k) aufweist, der mit einer Informationsquelle (23.1-23.k) verbindbar ist.

10. Nutzergerät (2.1-2.k) zum Anschluß an einen Access-Knoten (10) nach einem der Ansprüche 1 bis 8,
**dadurch gekennzeichnet, daß**
es einen in Reflexion arbeitenden Modulator aufweist, der mit einer Informationsquelle (23.1-23.k) verbindbar ist.

11. Verfahren zum Einspeisen von mehreren Signalen von mehreren Nutzern in ein optisches Netz mit folgenden Schritten:
- Erzeugung (1) von n Lichtsignalen unterschiedlicher Wellenlänge in einem Access-Knoten (10), der insbesondere nach einem der Ansprüche 1 bis 7 ausgestaltet ist;
- Auskoppeln (2) der Lichtsignale aus dem Access-Knoten (10) und Übermitteln (3) zu k Nutzergeräten (2.1-2.k), die insbesondere nach Anspruch 8 und/oder 9 ausgestaltet sind;
- Modulieren (4) der Lichtsignale mit den Nutzersignalen in den Nutzergeräten (2.1-2.k);
- Einkoppeln (5) der modulierten Lichtsignale in den Access-Knoten (10);
- Erzeugen (6) von Wellenlängenmultiplexsignalen im Access-Knoten (10); und
- Einspeisen (7) der Wellenlängenmultiplexsignale in das optische Netz.

12. Verwendung eines Access-Knotens (10) nach einem der Ansprüche 1 bis 7 und mindestens eines Nutzergeräts (2.1-2.k) nach einem der Ansprüche 8 und/oder 9 zur Durchführung eines Verfahrens nach Anspruch 10.
